# EUROPEAN PATENT SPECIFICATION

(11) **EP 2 310 200 B1**
(45) Date of publication and mention of the grant of the patent: **06.01.2016**
(21) Application number: 09774288.6
(22) Date of filing: 30.06.2009
(51) Int. Cl.: B32B 27/32

(54) **FILMS, ARTICLES PREPARED THEREFROM, AND METHODS OF MAKING THE SAME**
FOLIEN, DARAUS HERGESTELLTE ARTIKEL UND HERSTELLUNGSVERFAHREN DAFÜR
FILMS, ARTICLES PRÉPARÉS À PARTIR DE CEUX-CI ET LEURS PROCÉDÉS DE FABRICATION

(30) Priority: 01.07.2008 EP 08382024; 16.07.2008 EP 08382027
(43) Date of publication of application: 20.04.2011
(73) Proprietor: Dow Global Technologies LLC, Midland, MI 48674 (US)
(72) Inventor: ARROYO VILLAN, Maria, E-43007 Tarragona (ES); DONKERS, Ellen, NL-4533BA Terneuzen (NL)
(74) Representative: Boult Wade Tennant
(86) International application number: PCT/US2009/049171
(87) International publication number: WO 2010/002837

(56) References cited:
- WO-A-2004/098882
- WO-A-2008/079755
- US-A- 5 314 749
- US-A1- 2007 215 610
- US-A1- 2008 107 899
- US-B1- 6 391 411

## Description

### FIELD OF INVENTION

The invention relates to multilayered films, each containing at least three layers, and where at least one inner layer is formed from a composition comprising a high density ethylene-based polymer or a cyclic olefin copolymer, and where each outer layer is, independently, formed from a composition comprising a propylene-based polymer. Such films show improved tear properties and improved moisture barrier properties.

### BACKGROUND OF INVENTION

Films are used in numerous packaging applications, such in industrial, food and specialty packaging. For such packaging, it is desirable that the package be formed from a film that has a combination of specific properties, such as good moisture barrier properties, good tear properties, and good optics.

Currently cast polypropylene films are used for their good optics in combination with high Elmendorf tear. However, in certain application, such as food packaging, where water barrier is required, cast polypropylene films are not sufficient, and BoPP (bi-oriented polypropylene) films must be used. However, the oriented polypropylene films have inferior tear properties. In many applications, where tear propagation is an important performance requirement, other types of films, such as laminated films are required. Such films provide a barrier to moisture, and have good tear properties. However, lamination is a costly process, and there is a need for lower cost films with improve barrier to moisture and good tear properties.

U.S. Publication No. 2003/0211350 discloses a thermoplastic multilayer film which comprises: a) a core layer, comprising a polyolefin selected from the group consisting of isotactic PP homopolymer, EP copolymer, HDPE, and LLDPE; b) a first transition layer external to the core layer wherein the first transition layer comprises a polyolefin selected from the group consisting of syndiotactic PP, EP copolymer, PB copolymer, EPB terpolymer, MDPE, LLDPE, LDPE, metallocene-catalyzed PE, EVA copolymer, EMA copolymer, and ionomer; and c) a first skin layer external to the first transition layer and the core layer wherein the first skin layer comprises a polyolefin selected from the group consisting of PP homopolymer, HDPE, EP copolymer, PB copolymer, EPB terpolymer, MDPE, and LLDPE, the first skin layer being at least 0.5 µm (micron) in thickness with a melting point at least 5°C greater than the first transition layer.

European Patent Application No. 1529631A1 discloses an easy tear packaging film formed from a coextruded mono-web having a linear low density polyethylene heat sealant layer, a high density polyethylene barrier layer and a polypropylene print layer. The mono-web is uniaxially oriented in the transverse direction to provide linear tear characteristics. Ink is printed on the print layer. A clear energy cured coating is disposed on the print layer over the ink to provide high gloss, scuff resistance and heat resistance.

Novel Structures by Microlayer Coextrusion- Talc-Filled PP, PC/SAN, and HDPE/LLDPE, Mueller et al., Polymer Engineering and Science, February 1997, Vol. 37, No. 2, 355-362; discloses microlayer and nanolayer structures which contain large specific interfacial areas, and which are ideal for fundamental studies of phenomena such as interdiffusion and adhesion. Three examples of microlayered materials with up to 1024 layers are formed using a coextrusion process.

U.S. Patent 4,927,885 discloses polypropylene resin compositions for producing polypropylene films. The polypropylene resin compositions comprise 70 to 99 parts by weight of polypropylene and 1 to 30 parts by weight of a specific hydrogenated petroleum resin. The hydrogenated petroleum resin is prepared from by-products of oil and petrochemical industries, such as C₅ fraction and C₉ fraction by-produced in naphtha steam cracking process.

Japanese Publication No. 2002-137348 (Abstract) discloses a film for stretch packaging which consists of a three-layer structure of a base material layer and two surface layers. The base material layer consists of the following: a) 10-30 weight percent of a highly crystalline polypropylene with a mmmm pentad index of 0.970-0.995, obtained by 13C-NMR, b) 80-40 weight percent of an olefin soft resin, and c) 10-30 weight percent of a hydrogenated resin selected from petroleum resin, terpene resin and rosin resin. Both surface layers consist of resins with heat sealing properties.

Canadian Patent Application No. 2125891 discloses a film having one or more polyolefin layers, and a barrier coating. At least one polyolefin layer has a surface for receiving barrier coatings, and which includes a polyolefin and a hydrocarbon resin; the barrier coating is situated adjacent to this surface.

European Patent Application No. 0588667A2 discloses a multiple layer film that has at least one layer comprising a blend of propylene polymer or copolymer, and a hydrocarbon resin; and two additional layers comprising a propylene polymer or copolymer, ethylene alpha olefin copolymer, ionomer, polybutene, or blends thereof. A core layer of ethylene vinyl alcohol copolymer or other oxygen barrier material, or high density polyethylene, can be included in some embodiments.

Variables That Affect/Control High-Density Polyethylene Film Oxygen-Moisture Barrier, William G. Todd, Journal of Plastic Film and Sheeting, 2003, 19, 209-220; discloses multiple layer polyolefin-based films, containing polyethylene as the primary film component, used for packages that are effective in providing moisture and oxygen barriers. Film crystalline structure, relaxation rates of molten polyethylene, polyethylene manufacturing technology, polyethylene resin physical properties, atmospheric conditions, and film fabrication technology and structure are examined.

Specialty Products Based on Commodity Polymers, Lemstra et al., Polymers, 1985, Vol. 26, 1372-1384; discloses synthetic polymers, and in particular, high-modulus/high-strength polyethylene fibers and barrier films based on polypropylene.

International Patent Application WO 96/02388 discloses an oriented film structure of improved water vapor transmission rate that is prepared from an extruded and stretched mixture of the following: a) high crystallinity polypropylene (HCPP) having intermolecular stereoregularity greater than 93 percent, and h) a moisture barrier improving amount of polyterpene resin.

U.S. Publication No. 2002/0071960 discloses a biaxially oriented, multilayer polypropylene film, which comprises at least one base layer B, one interlayer Z and one top layer D, and contains migrating additives. The film contains a maximum of 0.15 percent, by weight, of migrating additives, based on the total weight of the film. The multilayer film structure is produced by coextrusion and biaxial stretching, followed by heat-setting, and, an optional, corona treatment.

International Patent Application WO 98/55537 discloses high density polyethylene (HDPE) films containing hydrocarbon resins having improved moisture barrier.

Improving Barrier Properties of Polypropylene Films, Thomas R. Mueller, Journal of Plastic Film and Sleeting, Vol. 14, 1998, 226-233; discloses films formed from polyolefins, and crystalline cores, crystalline layers, coatings of acrylic and polyvinylidene chloride copolymers (PVDC), and co-extrusions of biaxial oriented polypropylene (OPP) and biaxial oriented polyethylene terephthalate (PET). Permeability tests with menthol and d-limonene showed that in many cases the films with a lowered water vapor transmission rate (WVTR) also provided an improved barrier to these organic compounds, which simulate the flavors and taste of several types of foods.

Blown PP Based Coextruded Films as an Alternative for the Flexible Packaging Industry, German V. Laverde, ANTEC 2002, 2479-2483; discloses PP resins for the production of coextruded or monolayer blown films. This paper presents a comparison of mechanical and optical properties among structures using different polypropylene resins and different layer thickness.

A New Family of sHDPE Polymers for Enhanced Moisture Barrier Performance, Aubee et al., Journal of Plastic Film and Sheeting, 2006, 22, 315-330; discloses a new class of single site catalyzed high density polyethylene (sHDPE) resins for moisture barrier applications.

U.S. Patent 5,314,749 discloses multiple layer shrink film oriented in the longitudinal and/or transverse directions. These films comprise an internal layer comprising high density polyethylene, and outer layers each comprising olefinic polymer or copolymer. Intermediate polymeric adhesive layers can optionally be included in those coextruded embodiments, which do not melt bond adequately in the absence of such intermediate layers.

U.S. Patent 4,828,928 discloses a coextruded multiple layer film, oriented in primarily the longitudinal direction, and which comprises a core layer comprising high density polyethylene, outer layers comprising ethylene propylene copolymer, polypropylene, or blends thereof, and intermediate layers, bonding the outer layers to the cure layer, and comprising an ethylene copolymer.

International Publication No. WO 2008/079755 discloses a film comprising at least three layers, and wherein at least one layer is an inner layer with a thickness of 20 percent or less of the total thickness of the film. The inner layer, or a polymer component used to form the inner layer, has one of the following properties: A) a MD tensile, 2 percent secant modulus at least two times higher than the MD tensile, 2 percent secant modulus of a skin layer, or B) a MD tensile, 2 percent secant modulus at least five times lower than the MD tensile, 2 percent secant modulus of a skin layer. The inner layer, or at least one polymer component of the inner layer, also has one of the following properties: C) a melt index, I2 (190°C/2.16kg) of less than, or equal to, 2 g/10 min, or D) a melt flow rate, MFR (230°C/2.16 kg) of less than, or equal to, 5 g/10 min.

International Publication No. WO 2004/098882 discloses a multilayer, coextruded film composed of at least one core layer A, and of outer layers B and C arranged on the two sides. The core layer A comprises from 50 to 100 % by weight of cyclic olefin polymer (COC) having a Tg of at least 60°C. The outer layers B and C may comprise at least one sealable polymer and one functional polymer. Intermediate layers may be arranged between layer A and layers B and C to improve adhesion between the layers. This film has a total thickness in the range from 20 to 200 µm, the core layer A makes up from 5 to 60% of the total thickness of the film.

Additional films are disclosed in U.S. Patent Nos. 3,817,821; 4,355,076; 4,380,567; 6,391,411; U.S. Publication Nos. 2007/0215610; 2008/0107899; and International Publication No. WO 2008/017244.

There remains a need for an alternative to laminated BoPP/cast PP films in applications where barrier to moisture is a requirement, for example in food packaging. Such films should provide good tear properties and good moisture barrier properties. This is a further need for films that can be formed using a lower cost extrusion process, which does not require any additional steps prior to, or after, extrusion, and does not require tie layers or compatibilizers. These needs and others have been met by the following invention.

### SUMMARY OF THE INVENTION

The invention provides a film comprising at least three layers, one inner layer adjacent to two outer layers, and wherein at least one inner layer is formed from a composition comprising an ethylene-based polymer with a density greater than, or equal to, 0.945 g/cc, or a cyclic olefin copolymer; and wherein each outer layer is, independently, formed from a composition comprising a propylene-based polymer; and wherein the at least one inner layer is less than, or equal to, 25 percent of the total film thickness and wherein each outer layer is formed from the same composition, and wherein this composition comprises greater than 50 weight percent of a propylene homopolymer as the propylene based polymer.

### BRIEF DESCRIPTION OF THE DRAWINGS

Figure 1 depicts the water vapor transmission rate of the noted films.
Figure 2 depicts the Tear CD and MD of the noted films.
Figure 3 depicts the Drop Dart Impact of the noted films.
Figure 4 depicts the 2% Secant Modulus CD and MD of the noted films.
Figure 5 depicts the Optics - Haze (%) values of the noted films.
Figure 6 depicts the Optics - Gloss 45° (UB) values of the noted films.

### DETAILED DESCRIPTION OF THE INVENTION

As discussed above, the invention provides a film comprising at least three layers, one inner layer adjacent to two outer layers, and wherein at least one inner layer is formed from a composition comprising an ethylene-based polymer with a density greater than, or equal to, 0.945 g/cc, or a cyclic olefin copolymer; and
wherein each outer layer is, independently, formed from a composition comprising a propylene-based polymer;
and wherein the at least one inner layer is less than, or equal to, 25 percent of the total film thickness; and wherein each outer layer is formed from the same composition, and wherein this composition comprises greater than 50 weight percent of a propylene homopolymer as the propylene based polymer.

In one embodiment, the least one inner layer is less than, or equal to, 20 percent of the total film thickness.

In one embodiment, the least one inner layer is less than, or equal to, 18 percent of the total film thickness.

In one embodiment, the at least one inner layer has a thickness from 10 to 25 percent, preferably from 10 to 20 percent of the total thickness of the film.

In one embodiment, the at least one inner layer is formed from a composition comprising an ethylene-based polymer with a density greater than, or equal to, 0.945 g/cc. In a further embodiment, the composition used to form the inner layer comprises greater than 80 weight percent, preferably greater than 90 weight percent, and more preferably greater than 95 weight percent, of the ethylene-base polymer, based on the weight of the composition.

In one embodiment, the ethylene-based polymer has a density greater than, or equal to, 0.95 g/cc, preferably greater than, or equal to, 0.96 g/cc. In a further embodiment, the composition used to form the inner layer comprises greater than 80 weight percent, preferably greater than 90 weight percent, and more preferably greater than 95 weight percent, of the ethylene-base polymer, based on the weight of the composition.

In one embodiment, the ethylene-based polymer is an ethylene homopolymer. The ethylene-based polymer may have a combination of two or more embodiments as described herein.

In one embodiment, the inner layer is formed from a composition a cyclic olefin copolymer. In a further embodiment, the cyclic olefin copolymer is formed from ethylene and norbornene. In a further embodiment, the copolymer comprises a majority amount of polymerized ethylene, based on the weight of the copolymer.

In one embodiment, the propylene-based polymer has a density greater than, or equal to, 0.88 g/cc, preferably greater than, or equal to, 0.89 g/cc, even more preferably greater than, or equal to, 0.90 g/cc (1 cc = 1 cm³).

In one embodiment, the propylene-based polymer has a melt flow rate (MFR) greater than, or equal to, 6 g/10 min, preferably greater than, or equal to, 8 g/10 min.

The propylene-based polymer is a propylene homopolymer.

A propylene-based polymer may have a combination of two or more embodiments as described herein.

In one embodiment, an outer layer is formed from a composition comprising the propylene-based polymer and at least one other polymer. In a further embodiment, the propylene-based polymer is a propylene homopolymer. In a further embodiment, the outer layer is a skin layer.

In one embodiment, each outer layer is formed from a composition comprising the propylene-based polymer and at least one other polymer. In a further embodiment, the propylene-based polymer is a propylene homopolymer. In a further embodiment, each outer layer is a skin layer.

Each outer layer is formed from a composition comprising greater than 50 weight percent, preferably greater than 80 weight percent, and more preferably greater than 90 weight percent of the propylene-based polymer. The propylene-based polymer is a propylene homopolymer.

In one embodiment, each outer layer does not comprise an ethylene-based polymer. In one embodiment, each outer layer does not comprise an ethylene/α-olefin interpolymer.

In one embodiment, each outer layer does not comprise an ethylene/α-olefin interpolymer, where the α-olefin contains four or more carbon atoms.

Each outer layer is formed from the same composition. In a further embodiment, each outer layer is a skin layer.

In one embodiment, each outer layer is greater than, or equal to, 30 percent, preferably greater than, or equal to, 35 percent, of the total film thickness.

In one embodiment, each outer layer is a skin layer.

In one embodiment, the film is un-oriented. In one embodiment, the film is oriented.

In one embodiment, film consists of three layers. In a further embodiment, the three layers have a thickness ratio from 40/20/40 to 45/10/45.

In one embodiment, film consists of five layers.

In one embodiment, film consists of five layers. In a further embodiment, the five layers have a 25/10/30/10/25 thickness ratio.

In one embodiment, film consists of five layers. In a further embodiment, the five layers have a 25/10/30/10/25 thickness ratio. In one embodiment, at least two inner layers (10%) are formed from a composition comprising an ethylene-based polymer with a density greater than, or equal to, 0.945 g/cc, preferably greater than, or equal to, 0.95 g/cc. In a further embodiment, each outer layer (skin, 25% each) is formed from a composition comprising a propylene-based polymer with a density greater than, or equal to, 0.88 g/cc, preferably greater than, or equal to, 0.89 g/cc. In a further embodiment, the propylene-based polymer has a melt flow rate (MFR) greater than, or equal to, 6 g/10 min, preferably greater than, or equal to, 8 g/10 min. In a further embodiment, core layer (30%) is formed from a composition comprising a propylene-based polymer.

In one embodiment, the film has a total thickness less than, or equal to, 100 µm (microns).

In one embodiment, the film has a total thickness less than, or equal to, 55 µm (microns).

In one embodiment, the film has a total thickness less than, or equal to, 50 µm (microns).

In one embodiment, the film has a total thickness greater than, or equal to, 20 µm (microns), preferably greater than, or equal to, 25 µm (microns).

In a preferred embodiment, the film is formed by a co-extrusion process. In further embodiment, the film is formed by a cast film process. In another embodiment, the film is formed by a blown film process.

In one embodiment, the film is formed by a cast film process.

In one embodiment, the film is formed by a blown film process.

In one embodiment, the film has a WVTR less than, or equal to, 5.5 g/m²/day, preferably less than, or equal to, 5 g/m²/day. In a further embodiment, the film has a total thickness less than, or equal to, 55 µm (microns).

In one embodiment, the film has a WVTR less than, or equal to, 5 g/m²/day, preferably less than, or equal to, 4.5 g/m²/day. In a further embodiment, the film has a total thickness less than, or equal to, 55 µm (microns).

In one embodiment, the film has a CD tear strength greater than, or equal to, 400 g, preferably greater than, or equal to, 500 g. In a further embodiment, the film has a total thickness less than, or equal to, 55 µm (microns).

In one embodiment, the film has a MD tear strength greater than, or equal to, 200 g, preferably greater than, or equal to, 300 g. In a further embodiment, the film has a total thickness less than, or equal to, 55 µm (microns).

In one embodiment, the inner layer has a 2% secant modulus (MD) that is from 1.1 to 1.4 times the 2% secant modulus (MD) of at least one outer layer. In a further embodiment, the inner layer has a 2% secant modulus (MD) that is from 1.1 to 1.4 times the 2% secant modulus (MD) of each outer layer. In a further embodiment, each outer layer is a skin layer.

In one embodiment, the inner layer has a 2% secant modulus (MD) that is from 1.1 to 1.3 times the 2% secant modulus (MD) of at least one outer layer. In a further embodiment, the inner layer has a 2% secant modulus (MD) that is from 1.1 to 1.3 times the 2% secant modulus (MD) of each outer layer. In a further embodiment, each outer layer is a skin layer.

The thickness of a film layer can be determined, as known in the art, from the mass ratios of the layer compositions of the extruders used to form a multilayered film, and the final thickness of the multilayered film. For each film layer, the solid state density of each composition is determined, and the mass flow (kg/hr) of the associated extruder is known from the commonly used gravimetric feeders. From these two parameters, the volumetric flow of each layer composition can be determined. The volume ratio of each layer can be determined from the volume flow of the individual layer divided by the total volume flows of all layer compositions. For a constant total film thickness and width, the thickness ratio for each layer is the same as the volume ratio.

The thickness of a film layer can also be determined, as known in the art, by microscopic techniques, such as optical microscopy or electronic microscopy. As an example, a thin slice of the film is cut perpendicularly to the plane of the film using a microtome blade as follows. The film is cooled in liquid nitrogen in a microtome holder. Then a microtome blade cuts several slices from 10 to 15 µm (microns) in thickness. These slices are then observed with an optical microscope, and an image is projected therefrom. A software program, as known in the art, can be used to measure the thickness of each layer as shown on the projected image. Measurements can be made at different points on the image, and then an average can be determined. The film layers are clearly distinguishable by their different contrasts.

In one embodiment, the thickness of said inner layer is less than the thickness of an outer layer, and preferably less than thickness of each outer layer. In a further embodiment, each outer layer is a skin layer.

In one embodiment, the film does not contain an adhesive layer between two film layers.

In another embodiment, the at least one inner layer does not comprise a polar polymer selected from the group consisting of an ethylene vinyl acetate, a polyethylene terephthalate, a polyester, a polyamide, and combinations thereof.

An inventive film may comprise a combination of two or more embodiments as described herein.

The invention also provides an article comprising an inventive film.

An inventive article may have a combination of two or more embodiments as described herein.

### Ethylene-based Polymers for used in Inner Layer

Ethylene-based polymers include ethylene homopolymers or interpolymers, used as the sole polymer component, or as the major (> 50 weight percent based on sum weight of polymers) polymer component of a composition used to form a film layer. Such polymers include high density polyethylenes (HDPE), homogeneously branched linear ethylene-based polymers, homogeneously branched substantially linear ethylene-based polymers, and heterogeneously branched linear ethylene-based polymers. The amount of one or more of these polymers, if any, in a film composition, will vary depending on the properties desired, the other components, and the type of ethylene-based polymer. The ethylene-based polymer is not a carboxylic acid, anhydride or amine functionalized polymer (for example, a maleic anhydride grafted ethylene-based polymer). In one embodiment, the ethylene-based polymer is an ethylene homopolymer.

In one embodiment, the ethylene-based polymer has a density greater than 0.946 g/cc, preferably greater than, or equal to, 0.95 g/cc, and more preferably, greater than, or equal to, 0.96 g/cc.

In one embodiment, the ethylene-based polymer has a density less than 0.98 g/cc, preferably less than, or equal to, 0.975 g/cc, and more preferably, less than, or equal to, 0.97 g/cc.

In one embodiment, the ethylene-based polymer has a melt index (12) greater than, or equal to, 5.0 g/10 min, preferably greater than, or equal to, 5.5 g/10 min, more preferably greater than, or equal to, 6 g/10 min, and even more preferably greater than, or equal to, 7 g/10 min.

In one embodiment, the ethylene-based polymer has a melt index (12) less than, or equal to, 12 g/10 min, preferably less than, or equal to, 10 g/10 min, and more preferably less than, or equal to, 9 g/10 min.

In one embodiment, the ethylene-based polymer has a melt index (12) greater than, or equal to, 0.5 g/10 min, preferably greater than, or equal to, 1 g/10 min.

In one embodiment, the ethylene-based polymer has a melt index (12) less than, or equal to, 5 g/10 min, preferably less than, or equal to, 4 g/10 min, and more preferably less than, or equal to, 3 g/10 min.

Suitable comonomers useful for polymerizing with ethylene include, but are not limited to, ethylenically unsaturated monomers, and conjugated or nonconjugated dienes or polyenes. Examples of such comonomers include the C₃-C₂₀ α-olefins, such as propylene, isobutylene, 1-butene, 1-pentene, 1-hexene, 4-methyl-1-pentene, 1-heptene, 1-octene, 1-nonene, 1-decene. Preferred comonomers include propylene, 1-butene, 1-hexene, 4-methyl-1-pentene and 1-octene, and more preferably propylene, 1-butene, 1-hexene and 1-octene. Other suitable monomers include styrene, halo-or-alkyl-substituted styrenes, tetrafluoroethylenes, vinylbenzocyclobutanes, butadienes, isoprenes, pentadienes, hexadienes, octadienes and cycloalkenes, for example, cyclopentene, cyclohexene and cyclooctene. Typically, ethylene is copolymerized with one C₃-C₂₀ α-olefin to form an ethylene/α-olefin copolymer. Preferred comonomers include C₃-C₈ α-olefins, and preferably propylene, 1-butene, 1-pentene, 4-methyl-1-pentene, 1-hexene, 1-heptene, and 1-octene, and more preferably propylene, 1-butene, 1-hexene, and 1-octene.

The terms "homogeneous" and "homogeneously-branched" are used in reference to ethylene/α-olefin interpolymers, in which the α-olefin comonomer is randomly distributed within a given polymer molecule, and all of the polymer molecules have the same or substantially the same ethylene-to-comonomer ratio.

Included amongst the homogeneously branched linear ethylene interpolymers are ethylene polymers, which lack long chain branching (or measurable amounts of long chain branching), but do have short chain branches, derived from the comonomer polymerized into the interpolymer, and which are homogeneously distributed, both within the same polymer chain, and between different polymer chains. That is, homogeneously branched linear ethylene interpolymers lack long chain branching (or measurable amounts of long chain branching), just as is the case for the linear low density polyethylene polymers or linear high density polyethylene polymers, and are made using uniform branching distribution polymerization processes, as described, for example, by Elston in U.S. Patent 3,645,992. Commercial examples of homogeneously branched linear ethylene/α-olefin interpolymers include TAFMER polymers supplied by the Mitsui Chemical Company, and EXACT polymers supplied by Exxon Chemical Company.

The homogeneously branched substantially linear ethylene interpolymers are described in US Patent Nos. 5,272,236; 5,278,272; 5,703.187; 6,054,544; 6,335,410, and 6,723,810. Some of these references also disclose methods of preparing these polymers. In addition, the substantially linear ethylene interpolymers are homogeneously branched ethylene polymers having long chain branching. The long chain branches have the same comonomer distribution as the polymer backbone, and can have about the same length as the length of the polymer backbone. The carbon length of a long chain branch is longer than the carbon length of a short chain branch formed from the incorporation of one comonomer into the polymer backbone. Long chain branching can be determined by using 13C Nuclear Magnetic Resonance (NMR) spectroscopy, and can be quantified using the method of Randall (Rev. Macromol. Chem. Phys., C29 (2 &3), 1989, p. 285-297).

Typically, "substantially linear" means that the bulk polymer is substituted, on average, with 0.01 long chain branches per 1000 total carbons (including both backbone and branch carbons) to 3 long chain branches per 1000 total carbons. Polymers may be substituted with 0.01 long chain branches per 1000 total carbons, to 1 long chain branch per 1000 total carbons, or from 0.05 long chain branches per 1000 total carbons to 1 long chain branch per 1000 total carbons, or from 0.3 long chain branches per 1000 total carbons to 1 long chain branch per 1000 total carbons.

The heterogeneously branched linear ethylene interpolymers can also be used in the present invention. Heterogeneous linear ethylene interpolymers include interpolymers of ethylene and one or more C₃ to C₈ α-olefins. Homopolymers of ethylene can also be prepared using the same catalysts that are used to prepare the heterogeneous systems, such as Ziegler-Natta catalysts. Both the molecular weight distribution and the short chain branching distribution, arising from α-olefin copolymerization, are relatively broad compared to homogeneous linear ethylene polymers. Heterogeneous linear ethylene polymers can be made in a solution, slurry, or gas phase process using a Ziegler-Natta catalyst, and are well known to those skilled in the art. For example, see U.S. Patent No. 4,339,507.

Mixtures of heterogeneous and homogeneous ethylene polymers ("composite polyethylene") can also be used for the film compositions of the present invention, such as those disclosed by Kolthammer et al., in U.S Patents 5,844,045; 5,869,575; and 6,448,341.

### Propylene-based Polymers for Use in the Outer Layer

Suitable propylene-based polymers include propylene homopolymers, propylene-based interpolymers. The propylene-based polymer is not a carboxylic acid, anhydride or amine functionalized polymer (for example, a maleic anhydride grafted propylene-based polymer). The propylene-based polymer is a propylene homopolymer.

In one embodiment, the propylene-based polymer has a density greater than 0.88 g/cc, preferably greater than, or equal to, 0.89 g/cc, and more preferably, greater than, or equal to, 0.90 g/cc.

In one embodiment, the propylene-based polymer has a density less than 0.93 g/cc, preferably less than, or equal to, 0.92 g/cc, and more preferably, less than, or equal to, 0.91 g/cc.

In one embodiment, the propylene-based polymer has a melt flow rate (MFR) greater than, or equal to, 6 g/10 min, preferably greater than, or equal to, 7 g/10 min, and more preferably greater than, or equal to, 8 g/10 min.

In one embodiment, the propylene-based polymer has a melt flow rate (MFR) less than, or equal to, 12 g/10 min, preferably less than, or equal to, 11 g/10 min, and more preferably less than, or equal to, 10 g/10 min.

In one embodiment, the propylene-based polymer has a melt flow rate (MFR) greater than, or equal to, 0.5 g/10 min, preferably greater than, or equal to, 1 g/10 min.

In one embodiment, the propylene-based polymer has a melt flow rate (MFR) less than, or equal to, 3 g/10 min, preferably less than, or equal to, 2 g/10 min.

Suitable comonomers for polymerizing with propylene include ethylene, 1-butene, 1-pentene, 1-hexene, 1-heptene, 1-octene, 1-nonene, 1-decene, 1-unidecene, 1dodecene, as well as 4-methyl-1-pentene, 4-methyl-1-hexene, 5-methyl-1-hexene, vinylcyclohexane, and styrene. The preferred comonomers include ethylene, 1-butene, 1-hexene, and 1-octene, and more preferably ethylene.

Some propylene-based polymers include VERSIFY polymers (The Dow Chemical Company) and VISTAMAXX polymers (ExxonMobil Chemical Co.), LICOCENE polymers (Clariant), EASTOFLEX polymers (Eastman Chemical Co.), REXTAC polymers (Hunstman), and VESTOPLAST polymers (Degussa). Other suitable polymers include propylene-α-olefins block copolymers and interpolymers, and other propylene-based block copolymers and interpolymers known in the art.

The propylene-based polymers may have a combination of two or more embodiments as described herein.

### Additives

Stabilizer and antioxidants may he added to a resin formulation to protect the resin from degradation, caused by reactions with oxygen, which are induced by such things as heat, light or residual catalyst from the raw materials. Antioxidants are commercially available from Ciba-Geigy, located in Hawthorn, N.Y., and include IRGANOX 565, 1010 and 1076 which are hindered phenolic antioxidants. These are primary antioxidants, which act as free radical scavengers, and may be used alone or in combination with other antioxidants, such as phosphite antioxidants, like IRGAFOS 168, available from Ciba-Geigy. Phosphite antioxidants are considered secondary antioxidants, are not generally used alone, and are primarily used as peroxide decomposers. Other available antioxidants include, but are not limited to, CYANOX LTDP, available from Cytec Industries in Stamford, Conn., and ETHANOX 1330, available from Albemarle Corp. in Baton Rouge, Louisiana. Many other antioxidants are available for use by themselves, or in combination with other such antioxidants. Other resin additives include, but are not limited to, ultraviolet light absorbers, antistatic agents, pigments, dyes, nucleating agents, fillers, slip agents, fire retardants, plasticizers, processing aids, lubricants, stabilizers, smoke inhibitors, viscosity control agents and anti-blocking agents.

A composition used to form a film layer may comprise one or more additives as described above.

In one embodiment, a film composition comprises at least one additive selected from the group consisting of antioxidants, ultraviolet light absorbers, antistatic agents, pigments, dyes, nucleating agents, fillers, slip agents, fire retardants, plasticizers, processing aids, lubricants, stabilizes, smoke inhibitors, viscosity control agents, anti-blocking agents, and combinations thereof.

In one embodiment, a film composition comprises at least one additive selected from the group consisting of antioxidants, ultraviolet light absorbers, antistatic agents, pigments, dyes, nucleating agents, fillers, slip agents, fire retardants, plasticizers, processing aids, anti-blocking agents, and combinations thereof.

### Processes for Forming Inventive Films

A film composition of the invention can be prepared by selecting the thermoplastic polymers suitable for making each layer, forming a film composition of each film layer, and coextruding the film layers to form a film. Desirably, the film layers are bonded continuously over the interfacial area between films. Preferably the film is formed using a co-extrusion film process, and more preferably by a cast process.

For each layer, typically, it is suitable to extrusion blend the components and any additional additives, such as slip, anti-block, and polymer processing aids. The extrusion blending should be carried out in a manner such that an adequate degree of dispersion is achieved. The parameters of extrusion blending will necessarily vary depending upon the components. However, typically the total polymer deformation, that is, mixing degree, is important, and is controlled by, for example, the screw-design and the melt temperature. The melt temperature during film forming will depend on the film components.

After extrusion blending, a film structure is formed. Film structures may be made by conventional fabrication techniques, for example, cast extrusion, blown films, bubble extrusion, biaxial orientation processes (such as tenter frames or double bubble processes), cast/sheet extrusion. Conventional bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192. Biaxial orientation film manufacturing processes, such as described in the "double bubble" process of U.S.-A-Patent No. 3,456,044 (Pahlke), and the processes described in U.S.-A-Patent No. 4,352,849 (Mueller), U.S.-A-Patent Nos. 4,820,557 and 4,837,084 (both to Warren), U.S.-A-Patent No. 4,865,902 (Golike et al.), U.S.-A-Patent No. 4,927,708 (Herran et al.), U.S.-A-Patent No. 4.952,451 (Mueller), and U.S.-A-Patent Nos. 4,963,419 and 5,059,481 (both to Lustig et al.), can also be used to make the novel film structures of this invention.

The film compositions of the aforementioned processes may be made to any thickness depending upon the application. Typically, the multilayered films have a thickness less than, or equal to 1000 µm (microns), preferably less than, or equal to, 500 µm (microns), and more preferably less than, or equal to 100 µm (microns). In a preferred embodiment, the films have a total thickness of from 5 to 300 µm (microns), preferably from 20 to 200 µm (microns), more preferably from 40 to 100 µm (microns).

The invention films are not treated by irradiation, since irradiation will cause chain scission of the propylene-based polymer, which will in turn, impair the chemical and morphological intergrity of the film, and thus impair film properties.

In a preferred embodiment, the inventive films are not stretched.

### DEFINITIONS

Any numerical range recited herein, include all values from the lower value to the upper value, in increments of one unit, provided that there is a separation of at least two units between any lower value and any higher value. As an example, if it is stated that the amount of a component, or a value of a compositional or physical property, such as, for example, amount of a blend component, softening temperature, melt index, etc., is between 1 and 100, it is intended that all individual values, such as, 1, 2, 3, etc., and all subranges, such as, 1 to 20, 55 to 70, 197 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. Numerical ranges have been recited, as discussed herein, in reference to film thickness, melt index, melt flow rate, weight average molecular weight, molecular weight distribution, density, and other properties.

The term "multilayered film," as used herein, refers to a film structure with more than one layer or ply.

The term "film," as used herein, refers to a film structure with at least one layer or ply. The inventive films as described herein contain at least three layers or plies.

The term "inner layer," as used herein, refers to an interior film layer that is co-contiguous with another film on each surface.

The terms "skin" or "skin layer," as used herein, refers to an outermost, exterior film layer.

The term "outer layer," as used herein, refers to a layer adjacent to an inner layer. An outer layer may or may not be a skin layer. Preferably, the outer layer is a skin layer.

The phrase "adjacent to," in reference to two film layers, means "in contact with," without an intervening layer between the two film layers.

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer, employed to refer to polymers prepared from only one type of monomer (for example, ethylene homopolymer or propylene homopolymer), and the term interpolymer as defined hereinafter.

The term "interpolymer," as used herein, refers to polymers prepared by the polymerization of at least two different types of monomers. The generic term interpolymer thus includes copolymers, employed to refer to polymers prepared from two different types of monomers, and polymers prepared from more than two different types of monomers.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term, "ethylene-based polymer," as used herein, refers to a polymer that comprises a majority weight percent polymerized ethylene monomer (based on the total weight of the polymer).

The term, "ethylene-based interpolymer," as used herein, refers to a polymer that comprises a majority weight percent polymerized ethylene monomer (based on the total weight of the interpolymer), and at least one comonomer.

The term, "ethylene/α-olefin interpolymer," as used herein, refers to a polymer that comprises a majority weight percent polymerized ethylene monomer (based on the total weight of the interpolymer), an α-olefin comonomer, and optionally, one or more other comonomers.

The term, "propylene-based polymer," as used herein, refers to a polymer that comprises a majority weight percent polymerized propylene monomer (based on the total amount of the polymer).

The term, "propylene-based interpolymer," as used herein, refers to a polymer that comprises a majority weight percent polymerized propylene monomer (based on the total amount of the interpolymer), and at least one comonomer.

The term, "propylene/α-olefin interpolymer," as used herein, refers to a polymer that comprises a majority weight percent polymerized propylene monomer (based on the total amount of the interpolymer), an α-olefin comonomer, and optionally, one or more other comonomers.

The term, "propylene/ethylene interpolymer," as used herein, refers to a polymer that comprises a majority weight percent polymerized propylene monomer (based on the total amount of the interpolymer), ethylene comonomer, and optionally, one or more other comonomers.

### TEST PROCEDURES

The density of the ethylene-based polymers and propylene-based polymers were measured in accordance with ASTM D-792-00, which can also be used to measure density of other polymers as noted in this test.

Melt index (I₂) of ethylene-based polymers were measured in accordance with ASTM D-1238-04, condition 190°C/2.16 kg. The melt flow rate (MFR) of propylene-based polymers were measured in accordance with ASTM D-1238-04, condition 230°C/2.16 kg.

### Film Property Measurements

Film specimens were cut from cast films, prepared from conventional cast film equipment known in the art. Cast film fabrication parameters for some inventive films and comparative films are provided below in the experimental section (film thickness of 45-55 µm (microns). One skilled in the art can also prepare other types of films, such as blown films, using film fabrication parameters known in the art. Blown film processing parameters for a particular polymer or polymer blend, and for a particular film configuration, can be determined by those skilled in the art.

The Young's Modulus and 2% Secant Modulus were determined according to ISO 527-3-95. The film dimensions for "type 2 specimens" were 150 mm in length and 15 mm in width (film thickness less than 1 mm). The specimens were conditioned at 23°C, for 40 hours, ambient atmosphere, prior to testing. The clamp (with centering pins) distance on the tensile tester (INSTRON Model No. 5564) was 100 mm, and testing velocity was 5 mm/min. Five film samples were tested for each composition in cross direction (CD) and machine MD direction.

Tear resistance values were obtained using an Elmendorf tear tester in compliance with the ASTM D-1922-06a. For each film sample, ten specimens were tested in both machine (MD) and transverse/cross (CD) direction.

The falling dart film impact strength was determined by means of a dart impact tester, in accordance with the ISO 7765-1-88, using method A.

Haze and clarity were measured using a BYK-Gardner haze meter according to ISO 14782. Haze is defined as the percentage of transmitted light scattered (by the film) more than 2.5 degrees from the normal incident beam, whereas clarity is defined as the percentage of transmitted light that is scattered less than 4 degrees.

Gloss was measured in machine direction, and under an angle of 45°, by means of a BYK-Gardner micro-glossmeter, in compliance with ASTM D-2457-03. Gloss is a measure of the ability of a film to reflect incident light. The measured gloss (unit is UB - bright units) is related to a standard that is a black mirror.

Water Vapor Transmission Rate (TAPPI T-523 om-02). This method was used to evaluate rapidly, the water vapor transfer rate (WVTR) of sheets (films). A specimen film was clamped between a high-humidity chamber (90% RH) and a dry chamber (5% or less RH), and the rate change of humidity in the dry chamber was determined. By calibration, these dynamic test results can were converted to grams of moisture per square meter-day. Results were calculated based on a film thickness of 45 µm (microns).

Film thickness and layer ratios (Optical Microscopy). A film (0.05-1 gram) was cut with a knife to obtain a film sample with a triangle shape(0.05-0.2 cm²). This film sample was placed on a microtome holder located inside a cryo-camera (LEICA LN21 available from LEICA). The sample was cooled to a temperature lower than its Tg. Liquid nitrogen was used as the coolant, and was flowed through the camera by aid of a pump to maintain and control the desired temperature. The cooled sample was then cut by using a LEICA RM2155 microtome to obtain a slice of film about 10 microns in depth (thickness). The film slice was placed on top of a drop of an immersion oil (from LEICA , Ref. Index 1.518 Ref. 11513860). The drop of oil was originally placed on top of a sample holder. The "holder-oil-film" configuration was covered with a glass cover slide, and the final configuration was placed on an optical microscope, and the light and contrast was adjusted accordingly. The optical microscope was a LEICA DMLB (software LEICA IM 1000), equipped with a Digital Camera DC 300 (available from LEICA). To obtain an optical picture of the film, the "LEICA IM 1000" software was used, selecting a ruler (via a software selection) to measure the film thickness and the thickness of each layer. To calibrate the microscope's micrometer, a standard micrometer from LEICA was used.

The films and processes of this invention, and their use, are more fully described by the following examples. The following examples are provided for the purpose of illustrating the invention, and are not to be construed as limiting the scope of the invention.

### EXPERIMENTAL

### Materials

H-302 is a propylene homopolymer, MFR (230°C/2.16 kg) = 8.5-10.5 g/10 min, density of about 0.9 g/cm³ (1 cm³ = 1 cc), available from The Dow Chemical Company;

HDPE KT10000 UE (HDPE KT) is an ethylene homopolymer, I2 (190°C/2.16 kg) = 7-9 g/10 min., density= 0.962-0.966 g/cm³, available from the Dow Chemical Company.

Polymers typically contain one or more stabilizers as known in the art.

### Cast-Extrusion Process (Films A-C)

Films were co-extruded in a Collin CR 136/350 cast film extruder, outfitted with three extruders, two E25M extruders and the one E30M extruder, and a water-quenched chill roll. The sample collecting speed was about 8 m/min. The temperature profiles were as follows: (a) 220°C, 225°C, 230°C, 235°C and 240°C, for the E25M extruders containing the propylene homopolymer; and (b) 217°C, 225°C, 230°C, 235°C, 230°C for the E30M extruder(s) containing the HDPE; and (c) 230°C for the die. The film thickness was 45-55 µm. Films were stored for two days at ambient temperature before being analyzed. The three-layer film of (H-302)/HDPE/H-302) had an aimed thickness ratio of 40-45/20-10/40-45. Film properties are listed in Table 1.

**Table 1: Film Properties**

| | Three layer PP* (Film A) | PP/HDPE/PP** (Film B) | Three layer HDPE*** (Film C) |
|---|---|---|---|
| WVTR (g/m2/day)**** | 6.36 | 5.13 | 3.01 |
| Elmendorf tear (g) CD | 259 | 525 | 80 |
| Elmendorf tear (g) MD | 122 | 332 | 46 |
| Dart drop impact (g) | 50 | 64 | 50 |
| 2% secant modulus (MPa) CD | 466 | 464 | 676 |
| 2% secant modulus (MPa) MD | 468 | 446 | 591 |
| 45° gloss (UB) | 87.5 | 86.1 | 36.9 |
| haze (%) | 1.6 | 2.8 | 57.3 |

| | | | |
|---|---|---|---|
| * Reference Film A: three layer cast film of polypropylene (aimed thickness ratio of 40-45/20-10/40-45). Each layer formed from the above propylene-based polymer, H-302. Film thickness was 50 µm (microns) (average of five measurements; micronmeter). ** Inventive Film B: three layer cast film of propylene homopolymer (H-302)/HDPE KT/propylene homopolymer (H-302) (measured thickness ratio of about 42.3/17.3/40.4, and total thickness = 52 µm (microns) (optical microscopy)). *** Reference Film C: three layer cast film of HDPE (aimed thickness ratio of about 40-45/20-10/40-45). Each layer formed from the above HDPE KT. Film thickness was 52 µm (microns) (average of five measurements; micronmeter). **** Calculated based on a film thickness of 45 µm (microns). | | | |

As shown in Table 1, the inventive three-layer film, containing one HDPE layer of less than 20 percent of the total film thickness, had a water vapor transmission rate (WVTR) that was reduced by 20 percent, as compared with Film A (each layer was formed from the same propylene homopolymer). Additionally, the Elmendorf tear in cross direction (CD) for the inventive film (Film B) was twice as high as that of each reference film (Film A and Film C). The Elmendorf tear in the machine direction (MD) for the inventive film was almost tripled (x 2.72), as compared to that of reference Film A. Furthermore, it was unexpectedly discovered that the adhesion strength between each film layer, in the inventive film, was found to be sufficient. Thus, no compatibilizer was needed in the respective compositions used to form each layer of the inventive film.

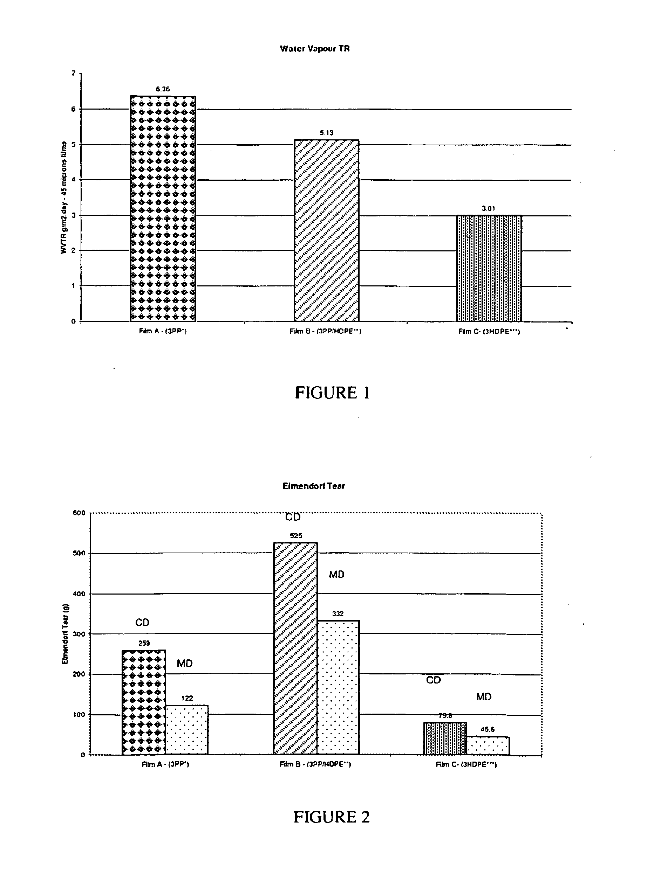

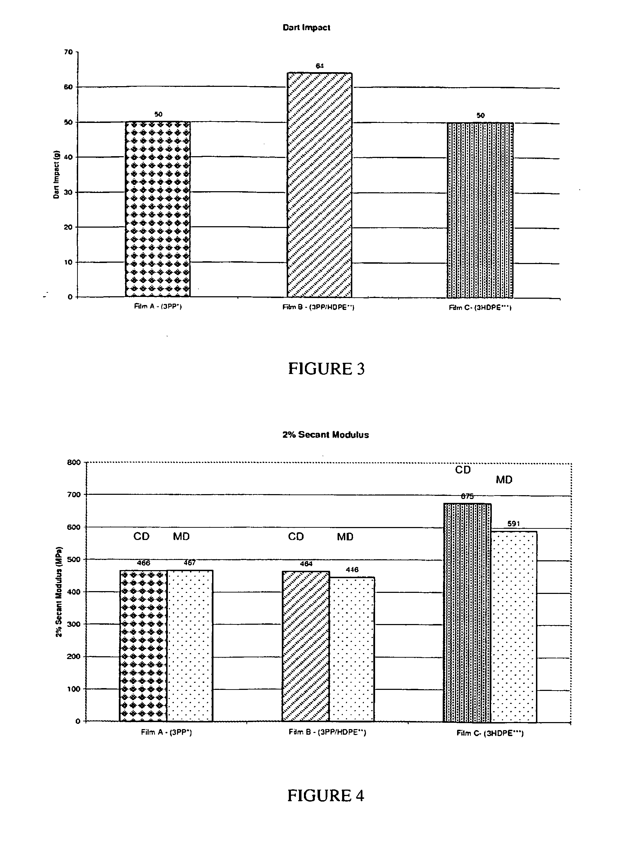

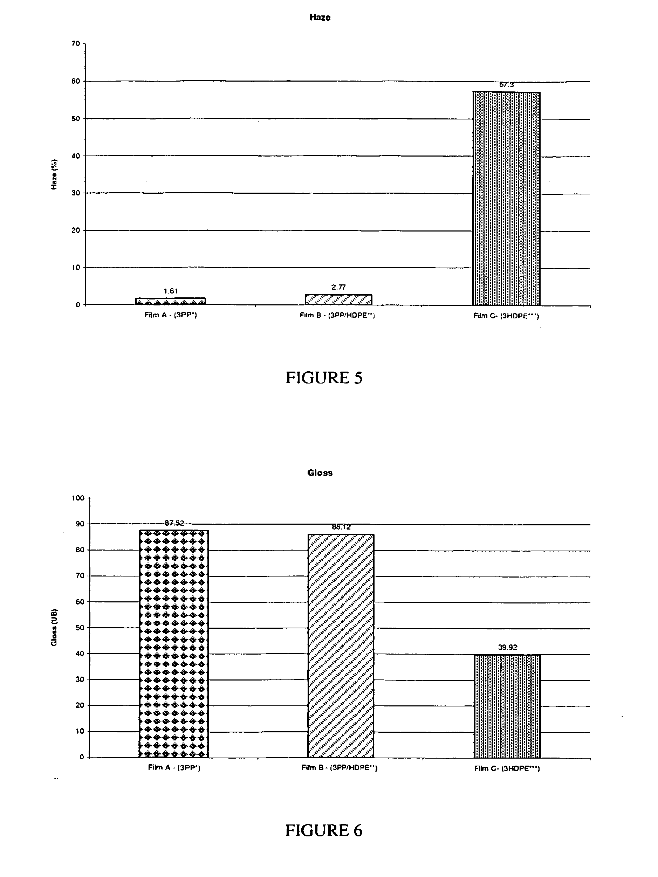

The property results for these three layer films are shown in Figures 1-6 (for each bar graph, order from left to right: Film A, Film B, Film C).

### Another Comparative Study

Three additional, three layered films (Films D-F) were co-extruded as discussed above. Films were co-extruded in a Collin CR 136/350 cast film extruder, outfitted with three extruders, two E25M extruders and the one E30M extruder, and a water-quenched chill roll. The sample collecting speed was about 8 m/min. The temperature profiles were as follows: (a) 220°C, 225°C, 230°C, 235°C and 240°C, for the E25M extruders containing the propylene homopolymer; and (b) 217°C, 225°C, 230°C, 235°C, 230°C for the E30M extruder(s) containing the HDPE; and (c) 230°C for the die. The film thickness was about 45-55 µm. Films were stored for two days at ambient temperature before being analyzed. Films D and E each had an aimed thickness ratio 40-45/20-10/40-45. Film F had an aimed layer thickness ratio of 30-35/40-30/30-35. Film properties are listed in Table 2.

**Table 2: Film Properties**

| | PP/PP/PP* Reference (Film D) | PP/HDPE/PP** Inventive (Film E) | PP/HDPE/PP*** Comparative (Film F) |
|---|---|---|---|
| WVTR **** (g/m2/day, 45µ thickness) | 6.77 | 5.58 | 4.98 |
| Elmendorf tear (g) CD | 221 | 547 | 519 |
| Elmendorf tear (g) MD | 139 | 343 | 242 |
| Dart drop impact (g) | 358 | 328 | 148 |
| 2% secant modulus (MPa) CD | 582.7 | 510.4 | 554.5 |
| 2% secant modulus (MPa) MD | 518.4 | 485.1 | 508.1 |
| 45° gloss (UB) | 81.5 | 78.6 | 76.9 |
| haze (%) | 2.45 | 4.52 | 6.42 |

| | | | |
|---|---|---|---|
| * Reference Film D: three layer cast film of polypropylene (aimed thickness ratio of 40-45/20-10/40-45). Each layer formed from the propylene-based polymer, H-302. Film thickness was 49 µm (microns) (average of five measurements; micronmeter). ** Inventive Film E: three layer cast film of propylene homopolymer (H-302)/HDPE KT/propylene homopolymer (H-302) (measured thickness ratio of about 39.6/20.8/39.6; total thickness = 53 µm (microns) (optical microscopy)). ***Comparative Film F: three layer cast film of propylene homopolymer (H-302)/HDPE KT/propylene homopolymer (H-302) (measured thickness ratio of about 34.0/34.0/32.0; total thickness = 50 µm (microns) (optical microscopy)). **** Calculated based on a film thickness of 45 µm (microns). | | | |

The results in Table 2 indicate that the inventive film (Film E), having an inner layer thickness less than 25 percent of the total film thickness, exhibits the best balance of barrier to moisture (WVTR), and tear (Elmendorf Tear CD and MD), as compared to the Reference film (Film D) and Comparative film (Film F). Also, the optics (gloss and haze) of the inventive film are much better than those of the comparative film. As seen in Film F, when the inner layer is greater than 25 percent of total thickness of the film, Elmendorf Tear (MD and CD) is reduced, the dart impact is reduced, and the optics are impaired (lower gloss values and higher haze values), as compared to the inventive film.

## Claims

1. A film comprising at least three layers, one inner layer adjacent to two outer layers, and wherein at least one inner layer is formed from a composition comprising an ethylene-based polymer with a density greater than, or equal to, 0.945 g/cc, or a cyclic olefin copolymer; and
wherein each outer layer is, independently, formed from a composition comprising a propylene-based polymer;
and wherein the at least one inner layer is less than, or equal to, 25 percent of the total film thickness; and
wherein each outer layer is formed from the same composition, and wherein this composition comprises greater than 50 weight percent of a propylene homopolymer as the propylene-based polymer.

2. The film of Claim 1, wherein the at least one inner layer is less than, or equal to, 20 percent of the total film thickness.

3. The film of any of the preceding claims, wherein the at least one inner layer is formed from a composition comprising an ethylene-based polymer with a density greater than, or equal to, 0.945 g/cc.

4. The film of Claim 3, wherein the ethylene-based polymer has a density greater than, or equal to, 0.95 g/cc, preferably greater than, or equal to, 0.96 g/cc.

5. The film of any of the preceding claims, wherein the propylene-based polymer has a density greater than, or equal to, 0.88 g/cc, preferably greater than, or equal to, 0.89 g/cc.

6. The film of any of the preceding claims, wherein the propylene-based polymer has a melt flow rate (MFR) greater than, or equal to, 6 g/10 min, preferably greater than, or equal to, 8 g/10 min.

7. The film of any of the preceding claims, wherein the film consists of three layers.

8. The film of Claim 7, wherein the three layers have a thickness ratio from 40/20/40 to 45/10/45.

9. The film of Claim 7 or Claim 8, wherein each outer layer is formed from a propylene-based polymer with a density greater than, or equal to, 0.88 g/cc, preferably greater than, or equal to, 0.89 g/cc.

10. The film of Claim 9, wherein the propylene-based polymer has a melt flow rate (MFR) greater than, or equal to, 6 g/10 min, preferably greater than, or equal to, 8 g/10 min.

11. The film of any of the preceding claims, wherein the ethylene-based polymer is an ethylene homopolymer.

12. The film of any of the preceding claims, wherein the film is un-oriented.

13. The film of any of the preceding claims, wherein the film has a WVTR less than, or equal to, 5 g/m²/day.

14. The film of any of the preceding claims, wherein the film has a CD tear strength greater than, or equal to, 400 g, preferably greater than, or equal to, 500 g.

15. The film of any of the preceding claims, wherein the film has a MD tear strength greater than, or equal to, 200 g, preferably greater than, or equal to, 300 g.

16. An article comprising the film of any of the preceding claims.

## Patentansprüche

1. Eine Folie, beinhaltend mindestens drei Schichten, eine innere Schicht angrenzend an zwei äußere Schichten, und wobei mindestens eine innere Schicht aus einer Zusammensetzung, beinhaltend ein Polymer auf Ethylenbasis mit einer Dichte von mehr als oder gleich 0,945 g/cm³ oder ein cyclisches Olefin-Copolymer, gebildet ist;
und
wobei jede äußere Schicht unabhängig aus einer Zusammensetzung, beinhaltend ein Polymer auf Propylenbasis, gebildet ist;
und wobei die mindestens eine innere Schicht weniger als oder gleich 25 Prozent der gesamten Foliendicke ausmacht; und
wobei jede äußere Schicht aus der gleichen Zusammensetzung gebildet ist, und wobei diese Zusammensetzung zu mehr als 50 Gewichtsprozent ein Propylenhomopolymer als das Polymer auf Propylenbasis beinhaltet.

2. Folie gemäß Anspruch 1, wobei die mindestens eine innere Schicht weniger als oder gleich 20 Prozent der gesamten Foliendicke ausmacht.

3. Folie gemäß einem der vorhergehenden Ansprüche, wobei die mindestens eine innere Schicht aus einer Zusammensetzung, beinhaltend ein Polymer auf Ethylenbasis mit einer Dichte von mehr als oder gleich 0,945 g/cm³, gebildet ist.

4. Folie gemäß Anspruch 3, wobei das Polymer auf Ethylenbasis eine Dichte von mehr als oder gleich 0,95 g/cm³, vorzugsweise mehr als oder gleich 0,96 g/cm³, aufweist.

5. Folie gemäß einem der vorhergehenden Ansprüche, wobei das Polymer auf Propylenbasis eine Dichte von mehr als oder gleich 0,88 g/cm³, vorzugsweise mehr als oder gleich 0,89 g/cm³, aufweist.

6. Folie gemäß einem der vorhergehenden Ansprüche, wobei das Polymer auf Propylenbasis einen Schmelzfließindex (MFR) von mehr als oder gleich 6 g/10 min, vorzugsweise mehr als oder gleich 8 g/10 min, aufweist.

7. Folie gemäß einem der vorhergehenden Ansprüche, wobei die Folie aus drei Schichten besteht.

8. Folie gemäß Anspruch 7, wobei die drei Schichten ein Dickenverhältnis von 40/20/40 bis 45/10/45 aufweisen.

9. Folie gemäß Anspruch 7 oder Anspruch 8, wobei jede äußere Schicht aus einem Polymer auf Propylenbasis mit einer Dichte von mehr als oder gleich 0,88 g/cm³, vorzugsweise mehr als oder gleich 0,89 g/cm³, gebildet ist.

10. Folie gemäß Anspruch 9, wobei das Polymer auf Propylenbasis einen Schmelzfließindex (MFR) von mehr als oder gleich 6 g/10 min, vorzugsweise mehr als oder gleich 8 g/10 min, aufweist.

11. Folie gemäß einem der vorhergehenden Ansprüche, wobei das Polymer auf Ethylenbasis ein Ethylenhomopolymer ist.

12. Folie gemäß einem der vorhergehenden Ansprüche, wobei die Folie nicht ausgerichtet ist.

13. Folie gemäß einem der vorhergehenden Ansprüche, wobei die Folie eine WVTR von weniger als oder gleich 5 g/m²/Tag aufweist.

14. Folie gemäß einem der vorhergehenden Ansprüche, wobei die Folie eine Querrichtungs-Reißfestigkeit von mehr als oder gleich 400 g, vorzugsweise mehr als oder gleich 500 g, aufweist.

15. Folie gemäß einem der vorhergehenden Ansprüche, wobei die Folie eine Maschinenrichtungs-Reißfestigkeit von mehr als oder gleich 200 g, vorzugsweise mehr als oder gleich 300 g, aufweist.

16. Ein Artikel, beinhaltend die Folie gemäß einem der vorhergehenden Ansprüche.

## Revendications

1. Un film comprenant au moins trois couches, une couche interne adjacente à deux couches externes, et dans lequel au moins une couche interne est formée à partir d'une composition comprenant un polymère à base d'éthylène avec une masse volumique supérieure, ou égale, à 0,945 g/cm³, ou un copolymère d'oléfine cyclique ; et
dans lequel chaque couche externe est, indépendamment, formée à partir d'une composition comprenant un polymère à base de propylène ;
et dans lequel cette au moins une couche interne est inférieure, ou égale, à 25 pour cent de l'épaisseur de film totale ; et
dans lequel chaque couche externe est formée à partir de la même composition, et dans lequel cette composition comprend plus de 50 pour cent en poids d'un homopolymère de propylène pour le polymère à base de propylène.

2. Le film de la revendication 1, dans lequel cette au moins une couche interne est inférieure, ou égale, à 20 pour cent de l'épaisseur de film totale.

3. Le film de n'importe lesquelles des revendications précédentes, dans lequel cette au moins une couche interne est formée à partir d'une composition comprenant un polymère à base d'éthylène avec une masse volumique supérieure, ou égale, à 0,945 g/cm³.

4. Le film de la revendication 3, dans lequel le polymère à base d'éthylène a une masse volumique supérieure, ou égale, à 0,95 g/cm³, de préférence supérieure, ou égale, à 0,96 g/cm³.

5. Le film de n'importe lesquelles des revendications précédentes, dans lequel le polymère à base de propylène a une masse volumique supérieure, ou égale, à 0,88 g/cm³, de préférence supérieure, ou égale, à 0,89 g/cm³.

6. Le film de n'importe lesquelles des revendications précédentes, dans lequel le polymère à base de propylène a un indice de fluidité à chaud (MFR) supérieur, ou égal, à 6 g/10 min, de préférence supérieur, ou égal, à 8 g/10 min.

7. Le film de n'importe lesquelles des revendications précédentes, le film étant constitué de trois couches.

8. Le film de la revendication 7, dans lequel les trois couches ont un rapport d'épaisseur allant de 40/20/40 à 45/10/45.

9. Le film de la revendication 7 ou de la revendication 8, dans lequel chaque couche externe est formée à partir d'un polymère à base de propylène avec une masse volumique supérieure, ou égale, à 0,88 g/cm³, de préférence supérieure, ou égale, à 0,89 g/cm³.

10. Le film de la revendication 9, dans lequel le polymère à base de propylène a un indice de fluidité à chaud (MFR) supérieur, ou égal, à 6 g/10 min, de préférence supérieur, ou égal, à 8 g/10 min.

11. Le film de n'importe lesquelles des revendications précédentes, dans lequel le polymère à base d'éthylène est un homopolymère d'éthylène.

12. Le film de n'importe lesquelles des revendications précédentes, le film étant non orienté.

13. Le film de n'importe lesquelles des revendications précédentes, le film ayant un WVTR inférieur, ou égal, à 5 g/m²/jour.

14. Le film de n'importe lesquelles des revendications précédentes, le film ayant une résistance au déchirement en DT supérieure, ou égale, à 400 g, de préférence supérieure, ou égale, à 500 g.

15. Le film de n'importe lesquelles des revendications précédentes, le film ayant une résistance au déchirement en DM supérieure, ou égale, à 200 g, de préférence supérieure, ou égale, à 300 g.

16. Un article comprenant le film de n'importe lesquelles des revendications précédentes.
